# FASCICULE DE BREVET EUROPEEN

(11) **EP 3 558 874 B1**
(45) Date de publication et mention de la délivrance du brevet: **07.09.2022**
(21) Numéro de dépôt: 17821654.5
(22) Date de dépôt: 22.12.2017
(51) Int. Cl.: C02F 1/00, C02F 1/24, B03D 1/14, B03D 1/24, B01D 24/12, C02F 1/44, C02F 1/52

(54) **INSTALLATION ET PROCÉDÉ POUR LE TRAITEMENT DE L'EAU**
ANLAGE UND VERFAHREN ZUR BEHANDLUNG VON WASSER
FACILITY AND PROCESS FOR TREATING WATER

(30) Priorité: 22.12.2016 FR 1663164
(43) Date de publication de la demande: 30.10.2019
(73) Titulaire: Suez International, 92040 Paris la Défense Cedex (FR)
(72) Inventeur: DELAGARDE, Sébastien, 94700 Maisons-Alfort (FR)
(74) Mandataire: IPAZ
(86) Numéro de dépôt international: PCT/EP2017/084510
(87) Numéro de publication internationale: WO 2018/115500

(56) Documents cités:
- WO-A1-93/23335
- WO-A1-2014/044619
- CN-A- 103 626 352
- CN-U- 201 785 272
- CN-U- 201 785 276
- GB-A- 2 263 694
- JP-A- 2003 170 158
- KR-A- 20160 053 542
- US-A- 5 591 347

## Description

### DOMAINE TECHNIQUE DE L'INVENTION

La présente invention a pour objet une installation pour le traitement de l'eau en vue de sa potabilisation ou de son dessalement, et un procédé mis en oeuvre à l'aide d'une telle installation.

L'invention se situe donc dans le domaine technique du traitement des eaux, plus précisément dans le domaine des traitements effectués en amont d'une étape de filtration membranaire.

### DESCRIPTION DE L'ART ANTERIEUR

Dans le domaine du traitement de l'eau, en particulier pour le dessalement ou la potabilisation, la qualité d'une eau en amont des membranes de filtration membranaire est de la plus grande importance pour le fonctionnement d'une installation. Ce critère est d'autant plus important lorsque l'eau à traiter est de qualité particulièrement « difficile » ou lors d'épisodes ponctuels de fort développement d'algues dans l'eau à traiter.

Différents documents de l'art antérieur décrivent un procédé de traitement de l'eau comprenant une étape de flottation à air dissous (ou Dissolved Air Flotation, soit « DAF » en langue anglaise) combinée à une étape de filtration gravitaire, éventuellement préalables à une étape de filtration membranaire.

De façon classique, le pré-traitement des eaux est réalisé par des ouvrages indépendants tels qu'une installation de DAF auquel fait suite un dispositif de filtration, notamment de filtration gravitaire. Ces installations présentent une importante emprise au sol.

Une solution à cet inconvénient est de combiner les ouvrages par la conception d'installations DAFF (DAF-Filtres) ou DAF-UF (DAF-Ultrafiltration).

La demande internationale WO 2014/044619 décrit une installation comprenant une zone de coagulation et une zone de floculation auxquelles est relié un réacteur de flottation, ledit réacteur de flottation communiquant avec un filtre gravitaire disposé de telle sorte que l'eau provenant du réacteur de flottation s'écoule dans le filtre gravitaire. Ledit filtre gravitaire est réparti sur une grande hauteur, celle-ci est comprise entre 1,5 m et 3 m. Le média filtrant peut être monocouche, constitué par du sable de granulométrie comprise entre 0,5 et 0,8 mm, ou multicouche, ledit média multicouche comprenant toujours au moins une couche de sable de granulométrie comprise entre 0,5 et 0,8 mm. La vitesse de l'étape de filtration à travers le filtre gravitaire est comprise entre 10 et 30 m/h.

La demande internationale WO 93/15021 décrit une installation comprenant un filtre à travers lequel passe l'eau préalablement traitée par flottation, à une vitesse de 10 m/h. Ce filtre est d'une hauteur de 1 m et est constitué par une couche d'anthracite superposée à une couche de sable, ou alternativement par une couche de sable.

La demande de brevet US2009/0211974 décrit une installation comprenant une zone de flottation et une zone de filtration sur membrane. Les membranes de filtration sont composées de modules juxtaposés horizontalement ou verticalement.

Les solutions DAF-Filtres de l'art antérieur tendent à l'obtention d'une qualité d'eau telle qu'aucune étape de filtration membranaire supplémentaire n'est nécessaire. De ce fait, ces installations doivent utiliser des matériaux de filtration de granulométrie fine afin d'obtenir une filtration efficace et une qualité d'eau suffisante. Ces installations comprennent en effet une couche de granulométrie de 0,5 à 0,8 mm pour l'étape finale de filtration.

Ces solutions présentent l'inconvénient d'une vitesse limitée à la vitesse du filtre, c'est-à-dire comprise entre 10 et 30 m/h, et la génération d'une importante perte de charge, la perte de charge étant proportionnelle à la hauteur de média et au débit. En effet, si une installation DAF « classique » (sans filtre) peut être utilisée à une vitesse pouvant atteindre 40 m/h, dans une installation DAF-Filtre selon l'état de l'art, en présence de hauteurs de matériau classiques, la vitesse est limitée à 12 m/h. La solution proposée par un filtre gravitaire tel que décrit dans WO 2014/044619, à savoir une augmentation de la hauteur de matériau de filtration, augmente la perte de charge mais aussi la hauteur totale de l'ouvrage, générant ainsi des coûts plus élevés.

CN201 785 272 U et CN201 785 276 U sont d'autres exemples de l'art antérieur pertinent.

Il est donc souhaitable de pouvoir procéder à une filtration en utilisant des vitesses plus élevées que celles décrites dans l'art antérieur, tout en limitant la hauteur et le coût de l'ouvrage.

### EXPOSE DE L'INVENTION

Dans ce dessein, un aspect de l'invention se rapporte à une installation de traitement de l'eau selon la revendication 1 et comprenant:
- des moyens d'amenée de l'eau à traiter,
- éventuellement une zone de coagulation et/ou une zone de floculation, dans laquelle débouchent lesdits moyens d'amenée de l'eau à traiter,
- un réacteur de flottation à air dissous comprenant une entrée reliée auxdits moyens d'amenée, et/ou éventuellement une entrée reliée à la sortie de ladite zone de coagulation et/ou de floculation, et
- un filtre gravitaire, ledit réacteur de flottation étant au moins en partie superposé audit filtre gravitaire et communiquant avec lui de sorte que l'eau provenant dudit réacteur de flottation puisse s'écouler gravitairement dans ledit filtre gravitaire,
- éventuellement au moins un moyen de lavage, notamment un moyen de rétrolavage, dudit filtre gravitaire,
- éventuellement au moins un filtre membranaire pour la filtration de l'eau provenant du filtre gravitaire,
ledit filtre gravitaire présentant un lit de média filtrant monocouche compris dans une paroi inférieure dudit réacteur de flottation et réparti sur une hauteur inférieure à 1 m, caractérisé en ce que ledit média filtrant est constitué d'une couche d'un matériau granulaire présentant une granulométrie égale ou supérieure à 1,5 mm et inférieure ou égale à 5 mm.

Par « filtre gravitaire » on entend un milieu poreux par lequel un mélange solide-liquide est amené à percoler, les particules solides étant idéalement retenues dans les espaces intergranulaires sur la plus grande partie de la hauteur de couche.

Par « filtre membranaire » ou filtre à membrane, on désigne un support poreux à la surface de laquelle se forme un gâteau de particules solides. Un tel filtre membranaire peut notamment être choisi notamment parmi tout moyen d'ultrafiltration et tout moyen de microfiltration connus de l'homme du métier.

Ladite installation peut comprendre tout type de moyen de lavage adapté ; selon un aspect particulier, le moyen de lavage comprend un moyen d'injection à contre-courant d'eau et/ou d'air. Le filtre gravitaire peut se colmater progressivement au cours de son utilisation. Pour conserver un niveau de performance adéquat de filtration, et selon la nature de l'installation de traitement de l'eau, des cycles de lavage doivent être régulièrement mis en oeuvre. L'absence de lavage peut entraîner le colmatage de certaines zones, ne laissant à l'eau qu'un passage réduit, la perte de charge s'accroît alors plus vite, la filtration devient localement plus rapide et moins efficace. Ces lavages consistent le plus souvent en l'injection d'eau, et éventuellement d'air à contre-courant à travers le filtre gravitaire, et consistent donc en un rétro-lavage. L'eau, et éventuellement l'air, sont injectés à l'aide de moyens d'injection bien connus de l'homme du métier, et permettent de dégager la matière accumulée dans les interstices du média filtrant, ladite matière sera ensuite éliminée.

De façon surprenante, une telle installation permet la mise en oeuvre d'un procédé de flottation suivi d'une filtration dans lequel la vitesse de filtration est supérieure à 30 m/h.

L'invention repose donc, de façon tout à fait originale, sur l'utilisation d'un filtre gravitaire monocouche d'une hauteur limitée, après le traitement de l'eau par une étape de DAF et éventuellement avant une étape de filtration membranaire.

En effet, d'après l'enseignement de l'état de l'art, l'augmentation de la hauteur de média filtrant est nécessaire pour augmenter considérablement la vitesse de filtration et donc les débits d'eau traités. La demande internationale WO 2014/044619 précédemment citée indique en effet une hauteur de média préférée d'environ 3 m, la hauteur totale de média pouvant atteindre 8 m au total dans le cas d'un média à trois couches (page 10, lignes 1-8).

De plus, selon l'état de l'art, plus la granulométrie du média filtrant constituant le filtre gravitaire est faible, meilleure est la qualité de l'eau filtrée, il serait donc indispensable que le média filtrant présent dans le filtre gravitaire contienne au moins une couche de média filtrant de granulométrie fine, tel que par exemple du sable dont la granulométrie est comprise entre 0,5 et 0,8 mm.

De manière étonnante, la qualité de l'eau obtenue après traitement sur un filtre gravitaire dans une installation selon l'invention est suffisante pour permettre une étape immédiatement ultérieure de filtration membranaire, et notamment une étape d'ultrafiltration.

Une installation selon l'invention permet en effet d'obtenir une vitesse de traitement par DAF-Filtre supérieure aux installations de l'état de l'art, grâce notamment à une faible hauteur de média filtrant mais également grâce à la granulométrie plus grossière que celle habituellement utilisée pour le matériau filtrant. La qualité de l'eau de sortie étant supérieure à celle qui est obtenue avec un DAF « seul », la taille du moyen de filtration membranaire ultérieure peut être réduite, réduisant ainsi les coûts d'installation.

Un objectif de la présente invention est donc de fournir une technique simple, fiable et économique de traitement de l'eau. La qualité de l'eau obtenue grâce à une installation selon DAF-Filtre selon l'invention est de niveau intermédiaire entre l'eau traitée par DAF et l'eau traitée par DAF-Filtre selon l'art antérieur, mais cependant tout à fait adaptée à une étape de filtration membranaire ultérieure. Dans une installation selon l'invention, un média filtrant monocouche présente l'avantage d'être moins coûteux qu'un média multicouche, et sa faible hauteur permet de réaliser une économie sur les volumes d'eaux de lavage.

Le lit de média filtrant selon l'invention est réparti sur une hauteur inférieure à 1 m et est constitué d'une couche d'un matériau granulaire présentant une granulométrie égale ou supérieure à 1,5 mm et inférieure ou égale à 5 mm.

De façon particulièrement avantageuse, le lit de média filtrant monocouche est réparti sur une hauteur égale ou supérieure à 0,5 m et inférieure à 1 m.

De façon particulièrement avantageuse, le média filtrant est constitué d'une couche d'un matériau granulaire présentant une granulométrie égale ou supérieure à 1,5 mm et inférieure ou égale à 4 mm, et plus préférentiellement supérieure ou égale à 2,5 mm et inférieure ou égale à 4 mm.

Un matériau granulaire est caractérisé par différents paramètres, notamment la granulométrie, qui est définie par le couple : taille effective (TE) et coefficient d'uniformité (CU), la forme des grains : anguleux (matériau concassé), ronds (sable de rivière ou de mer), ou plus ou moins plats (caractérisé par un coefficient d'aplatissement), et la friabilité, qui permet de choisir les matériaux susceptibles d'être utilisés en filtration sans risque de production de fines par les opérations de lavage.

Le choix du média le plus approprié pour l'installation est effectué par un homme du métier selon les caractéristiques connues de chacun des matériaux. Ce choix dépend de la nature de l'eau à filtrer (filtration directe d'eau brute, filtration d'eau décantée, filtration biologique d'eau résiduaire secondaire ou tertiaire) et de la qualité de l'eau que l'on désire obtenir. Il dépend également du type de filtre utilisé et de la perte de charge disponible.

De façon particulièrement avantageuse, le matériau granulaire est choisi parmi : l'anthracite, la pierre ponce, la filtralite, le charbon actif ou la zéolithe.

Selon un aspect encore plus particulier, dans une installation selon l'invention le matériau granulaire du média filtrant du filtre gravitaire est de l'anthracite.

Selon un aspect encore plus particulier, dans une installation selon l'invention le filtre gravitaire présente un lit d'anthracite monocouche, l'anthracite étant caractérisée par une granulométrie égale ou supérieure à 1,5 mm et inférieure ou égale à 5 mm, et de préférence égale ou supérieure à 1,5 mm et inférieure ou égale à 4 mm.

Selon l'invention le réacteur de flottation comporte une paroi inférieure qui comporte, au moins en partie, le média filtrant. Plus particulièrement, la paroi inférieure dudit réacteur de flottation comporte le média filtrant.

De façon particulièrement avantageuse, au moins une partie de la paroi inférieure du réacteur de flottation comporte un plancher supportant ledit média filtrant. De préférence, dans une installation selon l'invention, la paroi inférieure dudit réacteur de flottation comporte un plancher, notamment métallique, supportant ledit média filtrant.

Le rôle dudit plancher est d'assurer :
- une distribution uniforme des fluides de lavage, et tout particulièrement de l'air de lavage,
- une étanchéité à l'air et à l'eau, notamment en phase de lavage,
- une tenue mécanique aux efforts ascendants (lavage) et descendants (filtration, vidanges rapides),
- un fonctionnement durable sans intervention.

Parmi les planchers utilisables dans une installation selon l'invention on peut citer un plancher de type « Leopold^{®} » ou de type « Tetra^{®} LP Block de Severn Trent».

L'invention se rapporte également à un procédé de traitement d'eau en vue de sa potabilisation ou son dessalement selon la revendication 6, ledit procédé comprenant au moins un cycle de traitement de ladite eau dans une installation selon l'un des modes de réalisation précédemment décrits, comprenant :
- éventuellement une étape de coagulation et/ou de floculation de l'eau à traiter,
- une étape de flottation au sein d'un réacteur de flottation de l'eau éventuellement issue de ladite étape de coagulation et/ou de floculation,
- une étape de filtration gravitaire au sein d'un filtre gravitaire de l'eau provenant de ladite étape de flottation, ledit réacteur de flottation étant au moins en partie superposé audit filtre gravitaire,
- éventuellement au moins un cycle de lavage dudit filtre gravitaire, comprenant une étape de rétrolavage dudit filtre gravitaire, et
- éventuellement une étape de filtration membranaire de l'eau issue de l'étape de filtration gravitaire,
ledit filtre gravitaire présentant un lit de média filtrant monocouche compris dans une paroi inférieure dudit réacteur de flottation et réparti sur une hauteur inférieure à 1 m, caractérisé en ce que ledit média filtrant est constitué d'une couche d'un matériau granulaire présentant une granulométrie égale ou supérieure à 1,5 mm et inférieure ou égale à 5 mm.

L'eau traitée par le procédé peut servir d'eau d'alimentation d'une unité de dessalement ou d'une unité de désalinisation, notamment par osmose inverse. L'eau traitée peut également être amenée vers un moyen de potabilisation.

Ce procédé présente l'avantage essentiel de permettre d'atteindre une vitesse de traitement de l'eau supérieure à 30 m/h.

Selon l'invention le lit de média filtrant monocouche est réparti sur une hauteur inférieure à 1 m et est constitué d'une couche d'un matériau granulaire présentant une granulométrie égale ou supérieure à 1,5 mm et inférieure ou égale à 5 mm, de préférence égale ou supérieure à 1,5 mm et inférieure ou égale à 4 mm, et plus préférentiellement supérieure à 2,5 mm et inférieure ou égale à 4 mm.

De façon particulièrement avantageuse, ladite étape de filtration gravitaire est mise en oeuvre à une vitesse supérieure à 30 m/h.

De façon particulièrement avantageuse, ladite étape de filtration gravitaire est mise en oeuvre à une vitesse comprise entre 30 m/h et 50 m/h.

De façon particulièrement avantageuse, le procédé selon l'invention comprend en outre une étape de filtration membranaire de l'eau après l'étape de filtration gravitaire, en particulier une étape d'ultrafiltration

### BREVE DESCRIPTION DES FIGURES

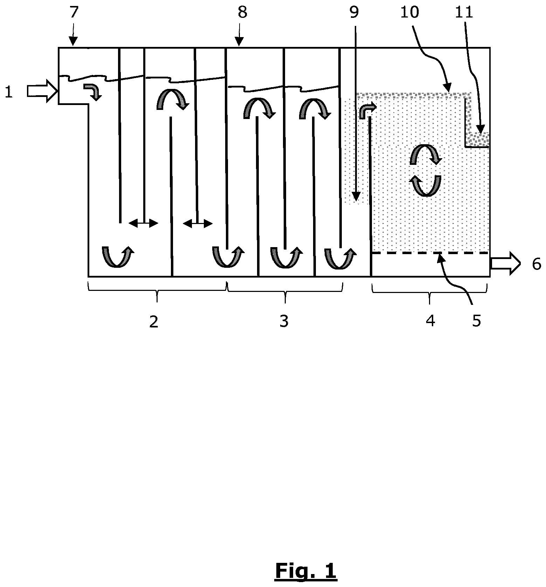

D'autres caractéristiques et avantages de l'invention ressortiront à la lecture de la description qui suit, en référence à la figure 1 qui représente une installation de traitement de l'eau selon un mode de réalisation de l'invention.

### DESCRIPTION DETAILLEE D'UN MODE DE REALISATION

A la figure 1 est illustrée une installation pour le traitement de l'eau, ladite installation comprenant :
- des moyens d'amenée de l'eau à traiter 1,
- une zone de coagulation 2 dans laquelle débouchent lesdits moyens d'amenée 1 de l'eau à traiter,
- un réacteur de flottation 4 comprenant une entrée reliée à la sortie d'une zone de floculation 3, et
- un filtre gravitaire 5, ledit réacteur de flottation 4 étant au moins en partie superposé audit filtre gravitaire 5 et communiquant avec lui de sorte que l'eau provenant dudit réacteur de flottation puisse s'écouler gravitairement dans ledit filtre gravitaire,
ledit filtre gravitaire présentant un lit de média filtrant monocouche réparti sur une hauteur inférieure à 1 m.

Dans la zone de coagulation 2 de l'installation de la figure 1, un agent coagulant 7 peut être ajouté puis mélangé à l'eau à traiter, grâce à des moyens adaptés. L'addition d'un agent coagulant tel que notamment le chlorure de fer ou le sulfate d'aluminium entraîne la coagulation des particules colloïdales et des particules en suspension dans l'eau à traiter, notamment les algues, le phytoplancton et une partie de la matière organique. Une fois leurs charges neutralisées, les colloïdes s'agglomèrent entre eux par agitation de type piston pour former des « flocs » dans la zone de floculation 3 hydraulique. Dans la zone de floculation 3 de l'installation de la figure 1, un agent de floculation 8 (ou adjuvant de coagulation) peut être ajouté puis mélangé à l'eau à traiter, grâce à des moyens adaptés. L'addition d'un agent de floculation permet d'agglomérer les particules en des amas de taille plus importante. L'eau, préalablement coagulée et en outre floculée est ensuite acheminée vers une zone d'injection d'eau sursaturée en oxygène 9, de gaz atmosphérique d'azote ou tout autre gaz approprié. Sous l'effet de la détente du gaz à l'intérieur du réacteur de flottation 4, des bulles de gaz se forment en remontant à la surface du réacteur de flottation 4, entraînant avec elles les éventuels flocs présents dans l'eau. Le mélange de bulles d'air et de flocs peut alors être évacué en surverse de de la zone de séparation 10 du réacteur de flottation, notamment via une goulotte 11 dans laquelle il peut être poussé au moyen d'un dispositif de raclage prévu à cet effet.

L'installation de la figure 1 comprend également un filtre gravitaire 5, le réacteur de flottation 4 étant au moins en partie superposé à ce filtre gravitaire 5 et communiquant avec lui de sorte que l'eau provenant dudit réacteur de flottation puisse s'écouler gravitairement dans ledit filtre gravitaire. Ce filtre gravitaire loge un média filtrant monocouche, c'est-à-dire constitué par une seule couche d'un matériau filtrant donné, ledit média étant réparti sur une hauteur inférieure à 1 m. L'eau traitée provenant du filtre gravitaire est ensuite conduite via un moyen d'amenée 6 et peut ensuite éventuellement être filtrée au moyen d'un filtre membranaire.

Le procédé de traitement des eaux mis en oeuvre par l'installation de la figure 1 comprend un ou plusieurs cycles de traitement successifs consistant à introduire l'eau à traiter, par des moyens d'amenée 1 dans la cuve de coagulation 2, suivie de la cuve de floculation 3. Au moins un réactif coagulant 7 et au moins un réactif de floculation 8 sont injectés et mélangés à l'eau à traiter. Sous l'effet du réactif coagulant, les particules colloidales et en suspension, présentes dans l'eau à traiter, s'agglomèrent et forment des flocs. L'eau est ensuite filtrée sur le filtre gravitaire 5, l'eau provenant de ladite filtration est acheminée par un moyen d'amenée 6 et peut ensuite être traitée par tout procédé de filtration membranaire, notamment ultrafiltration ou microfiltration.

Des essais comparatifs de traitement d'eau ont été réalisés dans une installation selon l'invention, en présence de différents filtres gravitaires monocouche, d'une hauteur de 0,8 m, constitués par un média filtrant de granulométrie de 1,5mm ; 4 mm ou 5 mm.

Dans le cadre de ces essais, un média filtrant de granulométrie respectivement de 1,5 ; 4 ou 5 mm est obtenu en utilisant de l'anthracite définie par le fabricant par une granulométrie comprise entre 1 et 3 mm, entre 3 et 5 mm ou entre 5 et 8 mm, respectivement.

Différents paramètres sont mesurés et comparés, en particulier la qualité de l'eau traitée après filtration par chacun des filtres gravitaires, et son adaptation à une étape ultérieure de filtration membranaire. La vitesse de passage à travers chacun des filtres gravitaires est également déterminée.

Ces résultats montrent la bonne efficacité d'un moyen de filtration selon l'invention par rapport aux moyens connus de l'art antérieur.

## Revendications

1. Installation de traitement d'eau comportant :
- des moyens d'amenée de l'eau à traiter 1,
- éventuellement une zone de coagulation et/ou une zone de floculation, dans laquelle débouchent lesdits moyens d'amenée de l'eau à traiter,
- un réacteur de flottation 4 à air dissous comprenant une entrée reliée auxdits moyens d'amenée, et/ou éventuellement une entrée reliée à la sortie de ladite zone de coagulation et/ou de floculation, et
- un filtre gravitaire 5, ledit réacteur de flottation étant au moins en partie superposé audit filtre gravitaire et communiquant avec lui de sorte que l'eau provenant dudit réacteur de flottation 4 puisse s'écouler gravitairement dans ledit filtre gravitaire,
- éventuellement au moins un moyen de lavage, notamment un moyen de rétrolavage, dudit filtre gravitaire,
- éventuellement au moins un filtre membranaire pour la filtration de l'eau provenant du filtre gravitaire,
ledit filtre gravitaire présentant un lit de média filtrant monocouche compris dans une paroi inférieure dudit réacteur de flottation et réparti sur une hauteur inférieure à 1 m, **caractérisé en ce que** ledit média filtrant est constitué d'une couche d'un matériau granulaire présentant une granulométrie égale ou supérieure à 1,5 mm et inférieure ou égale à 5 mm.

2. Installation selon la revendication 1, **caractérisée en ce que** ledit lit de média filtrant monocouche est réparti sur une hauteur égale ou supérieure à 0,5 m et inférieure à 1 m.

3. Installation selon la revendication 1 ou 2, **caractérisée en ce que** ledit média filtrant est constitué d'une couche d'un matériau granulaire présentant une granulométrie égale ou supérieure à 1,5 mm et inférieure ou égale à 4 mm, et plus préférentiellement supérieure ou égale à 2,5 mm et inférieure ou égale à 4 mm.

4. Installation selon l'une quelconque des revendications 1 à 3, **caractérisée en ce que** ledit matériau granulaire est choisi parmi : l'anthracite, la pierre ponce, la filtralite, le charbon actif ou la zéolithe.

5. Installation selon la revendication 1, **caractérisée en ce que** ladite paroi inférieure dudit réacteur de flottation comporte un plancher supportant ledit média filtrant.

6. Procédé de traitement d'eau en vue de sa potabilisation ou son dessalement, ledit procédé comprenant au moins un cycle de traitement de ladite eau dans une installation selon l'une des revendications 1 à 5, comprenant :
- éventuellement une étape de coagulation et/ou de floculation de l'eau à traiter,
- une étape de flottation à air dissous au sein d'un réacteur de flottation 4 de l'eau éventuellement issue de ladite étape de coagulation et/ou de floculation,
- une étape de filtration gravitaire au sein d'un filtre gravitaire 5 de l'eau provenant de ladite étape de flottation, ledit réacteur de flottation étant au moins en partie superposé audit filtre gravitaire,
- éventuellement au moins un cycle de lavage dudit filtre gravitaire, comprenant une étape de rétrolavage dudit filtre gravitaire, et
- éventuellement une étape de filtration membranaire de l'eau issue de l'étape de filtration gravitaire,
ledit filtre gravitaire présentant un lit de média filtrant monocouche compris dans une paroi inférieure dudit réacteur de flottation et réparti sur une hauteur inférieure à 1 m, **caractérisé en ce que** ledit média filtrant est constitué d'une couche d'un matériau granulaire présentant une granulométrie égale ou supérieure à 1,5 mm et inférieure ou égale à 5 mm.

7. Procédé de traitement d'eau selon la revendication 6, **caractérisé en ce que** ledit lit de média filtrant monocouche est réparti sur une hauteur inférieure à 1 m et est constitué d'une couche d'un matériau granulaire présentant une granulométrie égale ou supérieure à 1,5 mm et inférieure ou égale à 4 mm, et plus préférentiellement supérieure à 2,5 mm et inférieure ou égale à 4 mm.

8. Procédé de traitement d'eau selon la revendication 6 ou 7, **caractérisé en ce que** ladite étape de filtration gravitaire est mise en oeuvre à une vitesse supérieure à 30 m/h.

9. Procédé de traitement d'eau selon l'une quelconque des revendications 6 à 8, **caractérisé en ce que** ladite étape de filtration gravitaire est mise en oeuvre à une vitesse comprise entre 30 m/h et 50 m/h.

10. Procédé de traitement d'eau selon l'une quelconque des revendications 6 à 9, comprenant en outre une étape de filtration membranaire de l'eau après l'étape de filtration gravitaire, en particulier une étape d'ultrafiltration.

## Patentansprüche

1. Anlage zur Aufbereitung von Wasser, die aufweist:
- Zuführungseinrichtung 1 für das aufzubereitende Wasser,
- gegebenenfalls eine Koagulationszone und/oder eine Flockungszone, in welche die Zuführungseinrichtung für das aufzubereitende Wasser mündet,
- einen Flotationsreaktor 4 mit gelöster Luft, der einen mit der Zuführungseinrichtung verbundenen Eingang und/oder gegebenenfalls einen mit dem Ausgang der Koagulationszone und/oder der Flockungszone verbundenen Eingang aufweist, und
- einen Gravitationsfilter 5, wobei der Flotationsreaktor den Gravitationsfilter zumindest teilweise überlagert und so mit diesem in Verbindung steht, dass das aus dem Flotationsreaktor 4 stammende Wasser gravitativ durch den Gravitationsfilter fließen kann,
- gegebenenfalls mindestens eine Spüleinrichtung, insbesondere eine Rückspüleinrichtung, des Gravitationsfilters,
- gegebenenfalls mindestens einen Membranfilter zur Filtration von aus dem Gravitationsfilter kommenden Wasser,
wobei der Gravitationsfilter ein Bett aus einem einschichtigen Filtermedium aufweist, das in einer unteren Wand des Flotationsreaktors enthalten und über eine Höhe von weniger als 1 m verteilt ist, **dadurch gekennzeichnet, dass** das Filtermedium aus einer Schicht eines körnigen Materials mit einer Körnung von gleich oder größer als 1,5 mm und kleiner als oder gleich 5 mm besteht.

2. Anlage nach Anspruch 1, **dadurch gekennzeichnet, dass** das Bett aus einem einschichtigen Filtermedium über eine Höhe von 0,5 m oder mehr und weniger als 1 m verteilt ist.

3. Anlage nach Anspruch 1 oder 2, **dadurch gekennzeichnet, dass** das Filtermedium aus einer Schicht eines körnigen Materials mit einer Körnung von gleich oder größer als 1,5 mm und kleiner als oder gleich 4 mm besteht, und vorzugsweise größer als oder gleich 2, 5 mm und kleiner als oder gleich 4 mm.

4. Anlage nach einem der Ansprüche 1 bis 3, **dadurch gekennzeichnet, dass** das körnige Material aus Folgendem ausgewählt wird: Anthrazit, Bimsstein, Filtralite, Aktivkohle oder Zeolith.

5. Anlage nach Anspruch 1, **dadurch gekennzeichnet, dass** die untere Wand des Flotationsreaktors einen Boden aufweist, der das Filtermedium trägt.

6. Verfahren zur Aufbereitung von Wasser zur Trinkbarmachung oder Entsalzung, wobei das Verfahren mindestens einen Aufbereitungszyklus des Wassers in einer Anlage nach einem der Ansprüche 1 bis 5 aufweist, der folgende Schritte umfasst:
- gegebenenfalls einen Schritt zur Koagulation und/oder Flockung des aufzubereitenden Wassers,
- einen Schritt zur Flotation mit gelöster Luft innerhalb eines Flotationsreaktors 4 des Wassers, das gegebenenfalls aus dem genannten Koagulations- und/oder Flockungsschritt stammt,
- einen Schritt zur Gravitationsfiltration innerhalb des Gravitationsfilters 5 des Wassers, das aus dem Flotationsschritt stammt, wobei der Flotationsreaktor den Gravitationsfilter zumindest teilweise überlagert,
- gegebenenfalls mindestens einen Spülzyklus des Gravitationsfilters, der einen Schritt zur Rückspülung des Gravitationsfilters umfasst, und
- gegebenenfalls einen Schritt zur Membranfiltration des aus dem Schritt zur Gravitationsfiltration stammenden Wassers,
wobei der Gravitationsfilter ein Bett aus einem einschichtigen Filtermedium aufweist, das in einer unteren Wand des Flotationsreaktors enthalten und über eine Höhe von weniger als 1 m verteilt ist, **dadurch gekennzeichnet, dass** das Filtermedium aus einer Schicht eines körnigen Materials mit einer Körnung von gleich oder größer als 1,5 mm und kleiner als oder gleich 5 mm besteht.

7. Verfahren zur Aufbereitung von Wasser nach Anspruch 6, **dadurch gekennzeichnet, dass** das Bett aus einem einschichtigen Filtermedium über eine Höhe von weniger als 1 m verteilt ist und aus einer Schicht eines körnigen Materials mit einer Körnung von gleich oder größer als 1,5 mm und kleiner als oder gleich 4 mm besteht, und vorzugsweise größer als 2,5 mm und kleiner als oder gleich 4 mm.

8. Verfahren zur Aufbereitung von Wasser nach Anspruch 6 oder 7, **dadurch gekennzeichnet, dass** der Schritt zur Gravitationsfiltration mit einer Geschwindigkeit von über 30 m/h durchgeführt wird.

9. Verfahren zur Aufbereitung von Wasser nach einem der Ansprüche 6 bis 8, **dadurch gekennzeichnet, dass** der Schritt zur Gravitationsfiltration mit einer Geschwindigkeit von zwischen 30 m/h und 50 m/h durchgeführt wird.

10. Verfahren zur Aufbereitung von Wasser nach einem der Ansprüche 6 bis 9, das ferner einen Schritt zur Membranfiltration des Wassers nach dem Schritt zur Gravitationsfiltration umfasst, insbesondere einen Schritt zur Ultrafiltration.

## Claims

1. A water treatment facility comprising:
- means for conveying the water to be treated 1,
- optionally a coagulation zone and/or a flocculation zone, into which said means for conveying the water to be treated open,
- a dissolved air flotation reactor 4 comprising an inlet connected to said conveying means, and/or optionally an inlet connected to the outlet of said coagulation and/or flocculation zone, and
- a gravity filter 5, said flotation reactor being at least partially superposed on said gravity filter and communicating with it such that the water originating from said flotation reactor 4 can flow by gravity into said gravity filter,
- optionally at least one washing means, in particular a backwashing means, of said gravity filter, and
- optionally at least one membrane filter for filtering the water originating from the gravity filter,
said gravity filter having a single-layer filtering medium bed 1 comprised in a lower wall of said flotation reactor and distributed over a height of less than 1 m **characterized in that** said filtering medium is composed of a layer of a granular material having a particle size greater than or equal to 1.5 mm and less than or equal to 5 mm.

2. The facility as claimed in claim 1, **characterized in that** said single-layer filtering medium bed is distributed over a height greater than or equal to 0.5 m and less than 1 m.

3. The facility as claimed in claim 1 or 2, **characterized in that** said filtering medium is composed of a layer of a granular material having a particle size greater than or equal to 1.5 mm and less than or equal to 4 mm, and more preferably greater than or equal to 2.5 mm and less than or equal to 4 mm.

4. The facility as claimed in any of claims 1 to 3, **characterized in that** said granular material is selected among anthracite, pumice stone, Filtralite, activated carbon or zeolite.

5. The facility as claimed in claim 1, **characterized in that** said lower wall of said flotation reactor comprises a floor supporting said filtering medium.

6. A water treatment process for the purpose of potabilization or desalination, said process comprising at least one treatment cycle of said water in a facility as claimed in one of claims 1 to 5 comprising:
- optionally a coagulation and/or flocculation step of the water to be treated,
- a flotation step in an air dissolved flotation reactor 4 of the water optionally coming from said coagulation and/or flocculation step,
- a gravity filtration step in a gravity filter 5 of the water originating from said flotation step, said flotation reactor being at least partially superposed on said gravity filter,
- optionally at least one washing cycle of said gravity filter comprising a backwashing step of said gravity filter, and
- optionally a membrane filtration step of the water coming from the gravity filtration step,
said gravity filter having a single-layer filtering medium bed comprised in a lower wall of said flotation reactor and distributed over a height of less than 1 m **characterized in that** said filtering medium is composed of a layer of a granular material having a particle size greater than or equal to 1.5 mm and less than or equal to 5 mm.

7. The water treatment process as claimed in claim 6, **characterized in that** said single-layer filtering medium bed is distributed over a height of less than 1 m and is composed of a layer of a granular material having a particle size greater than or equal to 1.5 mm and less than or equal to 4 mm, and more preferably greater than 2.5 mm and less than or equal to 4 mm.

8. The water treatment process as claimed in claim 6 or 7, **characterized in that** said gravity filtration step is implemented at a rate greater than 30 m/h.

9. The water treatment process as claimed in any of claims 6 to 8, **characterized in that** said gravity filtration step is implemented at a rate of between 30 m/h and 50 m/h.

10. The water treatment process as claimed in any of claims 6 to 9, also comprising a membrane filtration step of the water after the gravity filtration step, in particular an ultrafiltration step.
